# EUROPÄISCHE PATENTSCHRIFT

(11) **EP 0 982 163 B1**
(45) Veröffentlichungstag und Bekanntmachung des Hinweises auf die Patenterteilung: **02.06.2004**
(21) Anmeldenummer: 99113393.5
(22) Anmeldetag: 10.07.1999
(51) Int. Cl.: B60H 1/00, B60H 1/32, B60P 3/20

(54) **Kühlbarer Aufbau für einen Lastkraftwagen, Anhänger oder Sattelanhänger**
Cooling structure for a truck, trailer or semitrailer
Structure de refroidissement pour un camion, remorque ou semi-remorque

(30) Priorität: 28.08.1998 DE 19839050
(43) Veröffentlichungstag der Anmeldung: 01.03.2000
(73) Patentinhaber: Frigoblock Grosskopf GmbH, 45356 Essen (DE)
(72) Erfinder: Grosskopf, Peter Volker Dipl.-Ing., 45133 Essen (DE)
(74) Vertreter: Schulze Horn, Kathrin

(56) Entgegenhaltungen:
- EP-A- 0 282 051
- NL-A- 7 605 073
- US-A- 3 246 592
- US-A- 4 549 405

## Beschreibung

Die vorliegende Erfindung betrifft einen kühlbaren Aufbau für einen Lastkraftwagen, Anhänger oder Sattelanhänger nach dem Oberbegriff des Patentanspruchs 1 oder des Patentanspruchs 3.

Derartige Aufbauten sind aus dem praktischen Betrieb bekannt. Meist ist das Kühlaggregat auf der Stirnwand so angeordnet, daß der kühle Luftstrom von oben auf die zu kühlenden Gegenstände im Inneren des Aufbaus trifft. Diese Gegenstände können z.B. Frischfleisch, Tiefkühlkost, Eiskrem, Obst, Rinder- oder Schweinehälften oder Container mit empfindlichen Gütern sein.

Bei Kühlfahrzeugen mit Zwangsluftführung, die bisher nur bei Sattelanhängern die Regel ist, ist es üblich, die Luft vom Boden anzusaugen, über den Verdampfer abzukühlen und über einen Luftkanal geführt an der Decke nach hinten zu leiten, wie dies in der DE-A-44 10 544 beschrieben ist. Bei Überseecontainern wird hingegen wegen der geforderten sehr hohen Temperaturregelgenauigkeit, z.B. für Bananentransport, das Zwangsluftführungsprinzip umgekehrt und es wird die Luft oberhalb der Ladung vom Verdampfer angesaugt, im Verdampfer abgekühlt und im Bodenbereich unter der Ware abgekühlt wieder in den Container eingeblasen.

Bisher besitzen praktisch alle kleineren Kühlfahrzeuge und auch die sogenannten Wechselaufbauten und meist auch Aufbauten für Großvolumenlastzüge aus Platzgründen keine Zwangsluftführung, so daß bei dichter Palettenbeladung bis 10°C Temperaturdifferenzen in der Ladung unvermeidlich sind, bei Heizbetrieb sogar bis 20°C hingenommen werden müssen, da sich die umgewälzte Warmluft über der Ladung durch Konvektion staut. Bei den neuen strengen EU-Temperaturvorschriften können jedoch zukünftig maximal 2 bis 3°C Temperaturdifferenz, möglichst noch weniger, akzeptiert werden.

Ein kühlbarer Aufbau, wie er in den Oberbegriffen der Ansprüche 1 und 3 angegeben ist, ist aus US-A-3 246 592 bekannt. Die bei diesem bekannten Aufbau durch den Spaltraum zwischen Stirnwand und Leitblech nach unten ausgeblasene, kalte Luft, wird hier durch ein auf dem Boden des Aufbaus vorgesehenes Kanalsystem über die Länge oder mindestens einen Teil der Länge des Aufbaus, je nach dem, ob ein Kühlaggregat oder zwei Kühlaggregate vorgesehen sind, verteilt. Der Kreislauf der Luft führt dann zwischen den Ladegütern durch natürliche Konvektion nach oben und die durch die Ladegüter erwärmte Luft streicht parallel zur Decke des Aufbaus entlang in Richtung zur Ansaugseite des als Wärmesenke dienenden Wärmetauschers des Kühlaggregats. Dort wird die Luft wieder abgekühlt und erneut in den parallel zur Stirnwand verlaufenden Spalt eingeblasen. Dabei kann der Aufbau entweder ein Kühlaggregat an einer Stirnwand des Aufbaus oder beidseitig ein Kühlaggregat, also je ein Kühlaggregat an jeder Stirnwand des Aufbaus aufweisen.

Als nachteilig wird bei diesem bekannten Aufbau angesehen, daß die gesamte Luft durch den Spaltraum zwischen Leitblech und Stirnwand und anschließend noch durch eine Vielzahl von kleinen Kanälen parallel zum Boden des Aufbaus geleitet werden muß. Hier ergeben sich insgesamt sehr hohe Strömungswiderstände, die zu einem relativ geringen Luftaustausch innerhalb des Aufbaus führen bzw. die nur durch eine besonders hohe Gebläseleistung und durch relativ große Kanalquerschnitte ausgeglichen werden können. Ein geringer Luftaustausch führt zu einer ungleichmäßigen Temperaturverteilung innerhalb des Aufbaus und damit auch innerhalb der in diesem transportierten Güter, was für die Qualität der Güter nachteilig und deshalb unerwünscht ist. Die alternative Verwendung von relativ großen Querschnitten für die Führung der abgekühlten Luft geht auf Kosten des Volumens des Aufbaus, das für die Unterbringung von Ladegut zur Verfügung steht. Dieser Verlust an Ladevolumen ist ebenfalls nachteilig und unerwünscht, da er die Transportkapazität des Aufbaus und des zugehörigen Fahrzeugs reduziert.

Es ist die Aufgabe der vorliegenden Erfindung, einen gattungsgemäßen Aufbau derart weiterzuentwickeln, daß die Kühlung des Inneren des Aufbaus auch bei dichter Beladung weitgehend gleichmäßig erfolgt und besonders im unteren Bereich wirksam ist.

Eine erste Lösung der Aufgabe erfolgt mit einem kühlbaren Aufbau mit den Merkmalen des Patentanspruchs 1.

Mit der Erfindung gemäß Anspruch 1 wird die vorteilhafte Wirkung erzielt, daß der Luftstrom aus dem Gebläse sich in zwei Teile aufspaltet, von denen der eine nach Kühlung durch den einen Wärmetauscher an der Decke des Aufbaus entlang streicht und der andere Teil des Luftstroms nach Kühlung durch den anderen Wärmetauscher zwischen Leitblech und Stirnwand nach unten strömt und dann am Boden entlang strömt, so daß die Kühlung weitgehend gleichmäßig ist.

Um bei relativ langen Aufbauten mit nahe der türfernen Stirnwand angeordnetem Kühlaggregat auch den gegenüber vom Kühlaggregat nahe der Tür liegenden Bereich ausreichend zu kühlen, ist bevorzugt weiter vorgesehen, daß unterhalb der Decke ein Deckenluftkanal verläuft, der sich von dem einen Wärmetauscher bis in den Bereich der gegenüberliegenden Stirnwand erstreckt.

Eine zweite, alternative Lösung der Aufgabe erfolgt mit einem kühlbaren Aufbau mit den Merkmalen des Patentanspruchs 3. Eine derartige beidseitige Anordnung ergibt eine besonders gleichmäßige Temperierung des Inneren des Aufbaus.

Vorteilhaft ist weiter vorgesehen, daß (jeweils) die Gesamtluftmenge etwa zu gleichen Teilen (40 bis 60%) durch die Wärmetauscher strömt. Bevorzugt wird dabei (jeweils) der erste, vom ersten Wärmetauscher abgekühlte Teilstrom der Gesamtluftmenge über einen sehr schmalen Schlitz im Stirnwandbereich mit hohem Druck nach unten geleitet und der zweite, vom zweiten Wärmetauscher abgekühlte Teilstrom der Luft mit hoher Ausblasgeschwindigkeit an der Decke nach hinten ausgeblasen.

Vorteilhaft beträgt (jeweils) der Abstand des Leitbleches von der Stirnwand etwa 20 bis 70 mm. Da nur etwa die Hälfte der Gesamtluftmenge mit hohem Druck durch die Zwangsluftführung nach unten zum Boden geblasen wird, kann bei nur 20 bis 70 mm Abstand des Leitblechs von der Stirnwand statt bisher 80 bis 120 mm bei ausreichender Leistung und Kühlung erstmals auch eine Zwangsluftführung selbst bei beengtesten Platzverhältnissen in Wechselaufbauten realisiert werden. Zwar verursacht ein engerer Spalt einen relativ höheren Leistungsverlust der Kältemaschine, vorteilhaft ist jedoch der Raumgewinn. Zudem ist der absolute Leistungsverlust wegen der Teilluftmenge gering.

Um eine große Wurfweite der kalten Luft zu erzielen, ist vorgesehen, daß die Austrittsgeschwindigkeit der Luft aus dem Wärmetauscher etwa 8 bis 15 m/s beträgt.

In weiterer Ausgestaltung ist vorgesehen, daß (jeweils) drei oder vier Gebläse beabstandet nebeneinander in Richtung quer zur Längsachse A des Aufbaus angeordnet sind.

Dabei sind zweckmäßig die Gebläse untereinander gleiche Radiallüfter mit senkrecht angeordneten Wellen. Dadurch wird ein breiter Luftstrom erzeugt, der Boden und Decke des Aufbaus weitgehend gleichmäßig überstreicht.

Um die Wirkung des Luftstromes noch weiter zu verstärken, ist zweckmäßig vorgesehen, daß (jeweils) auf der Luftaustrittsseite jedes der beiden Wärmetauscher eine den Luftstrom düsenförmig verengende Leitvorrichtung, vorzugsweise mit Regellamellen, angebracht ist. Damit wird die Geschwindigkeit der austretenden Luft und deren Wurfweite erhöht.

Vorzugsweise sind die Wärmetauscher und/oder die Gebläse einzeln oder in Gruppen regelbar.

Die Wärmetauscher sind vorzugsweise weiterhin partiell einseitig abtaubar, so daß die anderen weiterhin kühlen können.

Ausgestaltungen des kühlbaren Aufbaus gemäß der Erfindung werden nunmehr anhand einer Zeichnung näher erläutert. Die Figuren der Zeichnung zeigen:
- Figur 1: einen kühlbaren Aufbau in einer ersten Ausgestaltung in teilweise geschnittener Draufsicht,
- Figur 2: einen Schnitt durch den Aufbau entlang der Linie I-I in Figur 1,
- Figur 3: eine andere Ausgestaltung des Aufbaus in teilweise geschnittener Draufsicht, und
- Figur 4: einen Schnitt durch den Aufbau entlang der Linie II-II in Figur 3.

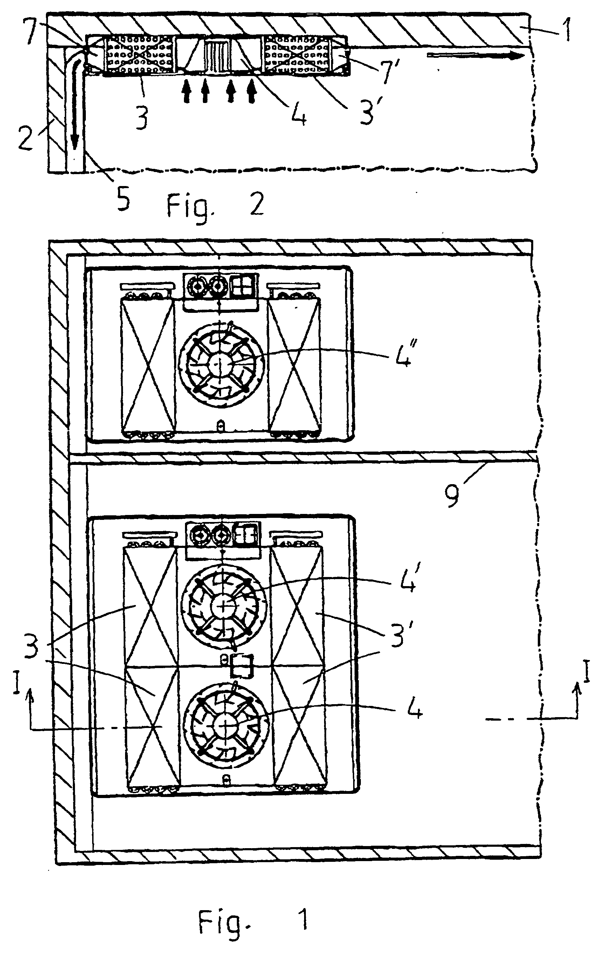

Figur 1 zeigt einen Aufbau mit zwei Kammern, die durch eine Trennwand 9 voneinander getrennt sind, die in Längsrichtung verläuft. In der in der Figur 1 oberen, schmaleren Kammer, ist ein Gebläse 4'' untergebracht und in der daneben liegenden breiteren Kammer sind zwei Gebläse 4, 4' angeordnet. Stromabwärts von den Gebläsen 4, 4', 4'' sind Wärmetauscher 3, 3' angeordnet. Es sind bei dieser Ausgestaltung Leitvorrichtungen 7, 7' so angebracht, daß sie den Luftstrom verengen und beschleunigen.

In Figur 2 ist links ein Leitblech 5 dargestellt, das beabstandet von einer Stirnwand 2 verläuft. Die Pfeile zeigen die Strömungsrichtung der Luft an, die etwa hälftig zwischen Stirnwand 2 und Leitblech 5 strömt und mit der anderen Hälfte unterhalb der Decke 1 des Aufbaus austritt.

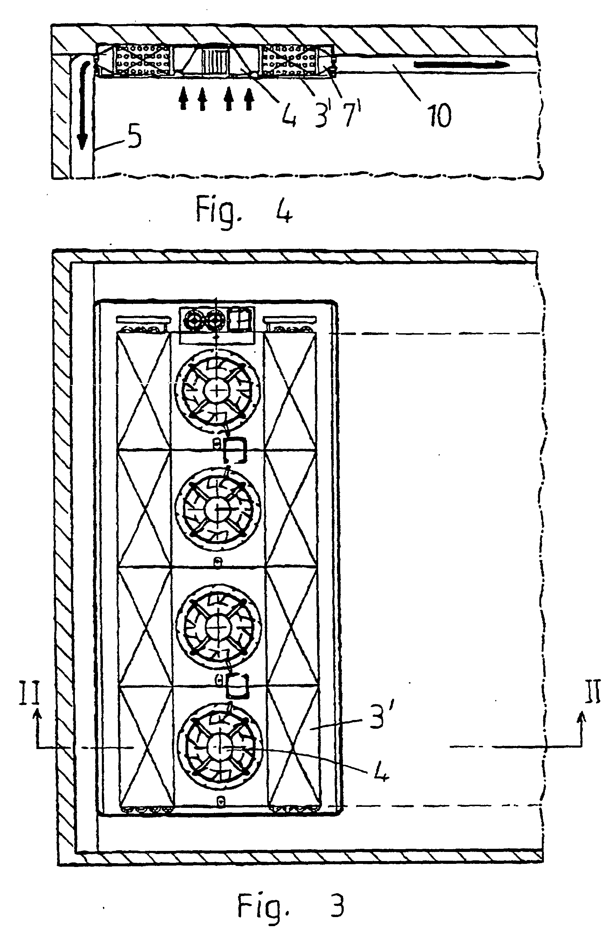

Figur 3 und 4 zeigen eine andere Ausgestaltung des Aufbaus, wobei hier vier Gebläse 4 nebeneinander angeordnet sind, wobei die Anordnung der Wärmetauscher 3' (und auch 3, nicht bezeichnet) sowie der Leitvorrichtungen der vorigen Ausgestaltung entspricht. Unterhalb der Decke 1 ist ein Deckenluftkanal 10 angebracht, der sich etwa auf 60 bis 80% der Aufbaulänge erstreckt und durch den Luft gemäß dem Pfeil in den Bereich nahe der nicht dargestellten Tür an der anderen Stirnseite des Aufbaus strömt. Auch hier wird etwa die Hälfte der Luft durch den Spalt (siehe Pfeil) nach unten geleitet, der zwischen Stirnwand und Leitblech 5 gebildet ist, worauf die Luft in Bodennähe austritt.

Die erfindungsgemäße Luftführung sichert sowohl im Kühlwie im Heizbetrieb eine optimale Durchströmung der Ladung und ermöglicht es, Temperaturverluste in der Ladung nach Be- und Entladevorgängen schnell wieder auszugleichen. Gleichzeitig garantiert der freie Luftstrom über der Ladung mit hoher Luftwurfweite nach hinten eine sehr schnelle Abkühlung der warmen und feuchten Luft, die beim Verteilerverkehr infolge häufiger Türöffnungen in den Laderaum des Aufbaus eingedrungen ist. Kälte-, Heiz- und Luftleistungen liegen daher um mindestens 50% höher als bei allen bisher am Markt angebotenen Kühl- und Heizaggregaten für Mehrkammerfahrzeuge, auch mit mehrfach geteilten Aufbauten oder für Split-Kälteanlagen. Hierdurch sind alle besonders bei Mehrkammerfahrzeugen kritischen Ladungs- und Temperaturzustände sicher zu beherrschen.

Darüber hinaus kompensiert der sehr hohe Luftdurchsatz mit der erfindungsgemäß aufgeteilten Luftführung auch die kritische Kälteeinstrahlung aus einem Tiefkühlabteil in eine benachbarte Frischdienstkammer im Bereich der unvermeidlichen Kältebrücken und Undichtigkeiten im Wand-, Boden- und Dichtungsbereich, so daß bei Mehrkammerfahrzeugen Frostschäden an den empfindlichen Frischprodukten erstmals sicher auszuschließen sind.

## Patentansprüche

1. Kühlbarer Aufbau für einen Lastkraftwagen, Anhänger oder Sattelaufhänger, insbesondere für geteilte Mehrkammerfahrzeuge, Wechselaufbauten und Container, wobei der Aufbau allgemein quaderförmig mit isolierten Wänden und einer Tür in einer seiner beiden Stirnwände ausgeführt ist, mit einem Kühlaggregat, dessen als Wärmesenke dienender Wärmetauscher im Aufbau und dessen als Wärmequelle dienender Wärmetauscher außerhalb des Aufbaus angeordnet ist, wobei der als Wärmesenke dienende Wärmetauscher unterhalb der Decke (1) des Aufbaus an einer der Stirnwände (2) angebracht ist und wobei etwa parallel beabstandet von der der Tür gegenüberliegenden Stirnwand (2) ein Leitblech (5) so angebracht ist, daß Luft aus dem der Stirnwand (2) benachbarten Wärmetauscher (3) zwischen dieser Stirnwand (2) und dem Leitblech (5) nach unten strömt und in Nähe eines Bodens (6) des Aufbaus austritt,,
**dadurch gekennzeichnet,**
- **daß** der als Wärmesenke dienende Wärmetauscher in Form von zwei in Längsrichtung des Aufbaus beabstandeten Wärmetauschern (3, 3') mit quer zur Längsachse A des Aufbaus liegenden Längsachsen ausgeführt ist,
- **daß** zwischen den beiden Wärmetauschern (3, 3') mindestens ein Gebläse (4) angeordnet ist, das Luft vorzugsweise in Richtung der Längsachse A des Aufbaus durch die beiden Wärmetauscher (3, 3') bläst,
- **daß** das Leitblech (5) so angebracht ist, daß ein Teil der Gesamtluftmenge aus dem der Stirnwand (2) benachbarten Wärmetauscher (3) zwischen dieser Stirnwand (2) und dem Leitblech (5) nach unten strömt, und
- **daß** der andere Teil der Gesamtluftmenge durch den anderen Wärmetauscher (3') strömt und in Richtung der Längsachse A des Aufbaus austritt.

2. Kühlbarer Aufbau nach Anspruch 1, **dadurch gekennzeichnet, daß** unterhalb der oberen Wand (1) ein Dekkenluftkanal (10) verläuft, der sich von dem Wärmetauscher (3') bis in den Bereich der gegenüberliegenden Stirnwand erstreckt, wobei er sich über 60 bis 80% der Länge des Aufbaus erstreckt.

3. Kühlbarer Aufbau für einen Lastkraftwagen, Anhänger oder Sattelaufhänger, insbesondere für geteilte Mehrkammerfahrzeuge, Wechselaufbauten und Container, wobei der Aufbau allgemein quaderförmig mit isolierten Wänden und einer Tür in einer seiner beiden Stirnwände ausgeführt ist, mit einem Kühlaggregat, dessen als Wärmesenke dienende Wärmetauscher im Aufbau und dessen als Wärmequelle dienender Wärmetauscher außerhalb des Aufbaus angeordnet ist, wobei die als Wärmesenke dienenden Wärmetauscher unterhalb der Decke (1) des Aufbaus an beiden Stirnwänden (2) angebracht sind und wobei etwa parallel beabstandet von jeder Stirnwand (2) ein Leitblech (5) so angebracht ist, daß Luft aus dem der Stirnwand (2) benachbarten Wärmetauscher (3) zwischen dieser Stirnwand (2) und dem Leitblech (5) nach unten strömt und in Nähe eines Bodens (6) des Aufbaus austritt,
**dadurch gekennzeichnet,**
- **daß** die als Wärmesenke dienenden Wärmetauscher jeweils in Form von zwei in Längsrichtung des Aufbaus beabstandeten Wärmetauschern (3, 3') mit quer zur Längsachse A des Aufbaus liegenden Längsachsen ausgeführt sind,
- **daß** jeweils zwischen den beiden Wärmetauschern (3, 3') mindestens ein Gebläse (4) angeordnet ist, das Luft vorzugsweise in Richtung der Längsachse A des Aufbaus durch die beiden Wärmetauscher (3, 3') bläst,
- **daß** jedes Leitblech (5) so angebracht ist, daß jeweils ein Teil der Gesamtluftmenge aus dem Wärmetauscher (3) zwischen Stirnwand (2) und Leitblech (5) nach unten strömt, und
- **daß** jeweils der andere Teil der Gesamtluftmenge durch den anderen Wärmetauscher (3') strömt und in Richtung der Längsachse A des Aufbaus austritt.

4. Kühlbarer Aufbau nach einem der Ansprüche 1 bis 3, **dadurch gekennzeichnet, daß** jeweils die Gesamtluftmenge etwa zu gleichen Teilen, d.h. zu etwa 40 bis 60% durch die Wärmetauscher (3 und 3') strömt.

5. Kühlbarer Aufbau nach Anspruch 4, **dadurch gekennzeichnet, daß** jeweils der Abstand des Leitbleches (5) von der Stirnwand (2) etwa 20 bis 70 mm beträgt.

6. Kühlbarer Aufbau nach Anspruch 4 oder 5, **dadurch gekennzeichnet, daß** die Austrittsgeschwindigkeit der Luft aus dem Wärmetauscher (3, 3') etwa 8 bis 15 m/s beträgt.

7. Kühlbarer Aufbau nach einem der vorhergehenden Ansprüche, **dadurch gekennzeichnet, daß** jeweils drei oder vier Gebläse (4, 4', 4'') beabstandet nebeneinander in Richtung quer zur Längsachse A des Aufbaus angeordnet sind.

8. Kühlbarer Aufbau nach Anspruch 7, **dadurch gekennzeichnet, daß** die Gebläse (4, 4', 4'') untereinander gleiche Radiallüfter mit senkrecht angeordneten Wellen sind.

9. Kühlbarer Aufbau nach einem der vorhergehenden Ansprüche, **dadurch gekennzeichnet, daß** jeweils auf der Luftaustrittsseite jedes der beiden Wärmetauscher (3, 3') eine den Luftstrom düsenförmig verengende Leitvorrichtung (7, 7'), vorzugsweise mit Regellamellen, angebracht ist.

10. Kühlbarer Aufbau nach einem der vorhergehenden Ansprüche, **dadurch gekennzeichnet, daß** die Wärmetauscher (3', 3') und/oder die Gebläse (4,4',4'') einzeln oder in Gruppen regelbar sind.

11. Kühlbarer Aufbau nach Anspruch 9, **dadurch gekennzeichnet, daß** die Wärmetauscher (3, 3') partiell einseitig abtaubar sind.

## Claims

1. Coolable body for a lorry, trailer or semitrailer, in particular for partitioned multi-chamber, vehicles, swap bodies and containers, wherein the body is, in general, designed rectangular in shape and is provided with insulated walls and a door in one of its two end walls and comprises a refrigeration unit the heat exchanger of which that is provided as a heat sink is arranged inside the body and the heat exchanger of which that is provided as a heat source is arranged outside the body, wherein the heat exchanger that is provided as a heat sink is attached beneath the ceiling (1) of the body at one of the end walls (2), and wherein a baffle plate (5) that is spaced apart approximately in parallel from the end wall (2) positioned opposite to the door is attached such that air from the heat exchanger (3) arranged adjacent to the end wall (2) flows down between said end wall (2) and the baffle plate (5) and exits near a floor (6) of the body,
**characterized in that**
- the heat exchanger that is provided as a heat sink is designed in the form of two heat exchangers (3, 3') that are spaced apart from each other in the longitudinal direction of the body and the longitudinal axes of which are extending in transverse direction with regard to the longitudinal axis A of the body;
- at least one blower (4) that blows air through the two heat exchangers (3, 3'), preferrably in the direction of the longitudinal axis A of the body, is arranged between the two heat exchangers (3, 3');
- the baffle plate (5) is attached such that a portion of the total air volume from the heat exchanger (3) arranged adjacent to the end wall (2) flows down between said end wall (2) and the baffle plate (5); and
- the other portion of the total air volume flows through the other heat exchanger (3') and exits in the direction of the longitudinal axis A of the body.

2. Coolable body according to Claim 1, **characterized in that** a ceiling-mounted air duct (10) is arranged beneath the upper wall (1), said air duct (10) extending from the heat exchanger (3') to and into the region of the opposite end wall and extending across 60% to 80% of the length of the body.

3. Coolable body for a lorry, trailer or semitrailer, in particular for partitioned multi-chamber vehicles, swap bodies and containers, wherein the body is, in general, designed rectangular in shape and is provided with insulated walls and a door in one of its two end walls and comprises a refrigeration unit the heat exchangers of which that are provided as a heat sink are arranged inside the body and the heat exchanger of which that is provided as a heat source is arranged outside the body, wherein the heat exchangers that are provided as a heat sink are attached beneath the ceiling (1) of the body at either of the end walls (2), and wherein a baffle plate (5) that is spaced apart approximately in parallel from either end wall (2) is attached such that air from the heat exchanger (3) arranged adjacent to the end wall (2) flows down between said end wall (2) and the baffle plate (5) and exits near a floor (6) of the body,
**characterized in that**
- the heat exchangers that are provided as a heat sink are designed in the form of two heat exchangers (3, 3') that are spaced apart from each other in the longitudinal direction of the body and the longitudinal axes of which are extending in transverse direction with regard to the longitudinal axis A of the body;
- at least one blower (4) that blows air through the two heat exchangers (3, 3'), preferrably in the direction of the longitudinal axis A of the body, is arranged between the two heat exchangers (3, 3');
- each baffle plate (5) is attached such that a portion of the total air volume from the heat exchanger (3) arranged adjacent to the end wall (2) flows down between said end wall (2) and the baffle plate (5); and
- the respectively other portion of the total air volume flows through the other heat exchanger (3'), and exits in the direction of the longitudinal axis A of the body.

4. Coolable body according to one of Claims 1 to 3, **characterized in that** the portions of the total air volume flowing through the heat exchangers (3 and 3') are each approximately the same, i.e. approximately 40% to 60%.

5. Coolable body according to Claim 4, **characterized in that** each baffle plate (5) is spaced apart from the end wall (2) by approximately 20 mm to 70 mm.

6. Coolable body according to Claim 4 or 5, **characterized in that** the air exits from the heat exchanger (3, 3') at an exit rate of approximately 8 m/sec to 15 m/sec.

7. Coolable body according to one of the preceding claims, **characterized in that** the blowers (4, 4', 4'') that are spaced apart from each other are arranged in groups of three or four in a transverse direction with regard to the longitudinal direction A of the body.

8. Coolable body according to Claim 7, **characterized in that** the blowers (4, 4', 4'') are centrifugal blowers of identical design with shafts that are arranged in vertical direction.

9. Coolable body according to one of the preceding claims, **characterized in that** a diffuser (7, 7') that narrows the air flow in the form of a nozzle and is preferrably provided with control louvers is arranged on the air exit side of each of the two heat exchangers (3, 3').

10. Coolable body according to one of the preceding claims, **characterized in that** the heat exchangers (3, 3') and/or the blowers (4, 4', 4'') can be controlled either separately or in groups.

11. Coolable body according to Claim 9, **characterized in that** the heat exchangers (3, 3') can be partially defrosted on one side.

## Revendications

1. Structure frigorifique pour camion, remorque ou semi-remorque, en particulier pour véhicules à plusieurs chambres séparées, carrosseries interchangeables et conteneurs, dans laquelle la structure est généralement parallélépipédique et comprend des parois isolées et une porte dans l'une de ses deux parois frontales, comporte un ensemble frigorifique dont les échangeurs thermiques servant de puits thermiques sont disposés dans la structure et dont les échangeurs thermiques servant de source thermique sont disposés à l'extérieur de la structure, dans laquelle l'échangeur thermique servant de puits thermique est monté au-dessous du plafond (1) de la structure sur l'une des parois frontales (2) et dans laquelle un déflecteur (5) est monté à peu près parallèlement à la paroi frontale (2) qui fait face à la porte, à distance de cette paroi, d'une manière telle que de l'air sortant de l'échangeur thermique (3) voisin de la paroi frontale (2) s'écoule vers le bas entre cette paroi frontale (2) et le déflecteur (5) et sort au voisinage d'un fond (6) de la structure,
**caractérisée en ce que**
- l'échangeur thermique servant de puits thermique consiste en deux échangeurs thermiques (3, 3') espacés dans la direction longitudinale de la structure, à axes longitudinaux disposés transversalement à l'axe longitudinal A de la structure, **en ce que**
- au moins un ventilateur (4) qui souffle de l'air de préférence dans la direction de l'axe longitudinal A de la structure à travers les deux échangeurs thermiques (3, 3') est disposé entre les deux échangeurs thermiques (3, 3'), **en ce que**
- le déflecteur (5) est monté d'une manière telle qu'une première partie du débit global d'air s'écoule vers le bas hors de l'échangeur thermique (3) voisin de la paroi frontale (2) entre cette paroi frontale (2) et le déflecteur (5), et **en ce que**
- l'autre partie du flux global d'air s'écoule à travers l'autre échangeur thermique (3') et sort de la structure dans la direction de l'axe longitudinal A.

2. Structure frigorifique selon la revendication 1, **caractérisée en ce qu'**un canal d'air (10) de plafond qui s'étend de l'échangeur thermique (3') jusque dans la zone de la paroi frontale opposée court au-dessous de la paroi supérieure (1), et s'étend sur 50 à 80% de la longueur de la structure.

3. Structure frigorifique pour camion, remorque ou semi-remorque, en particulier pour véhicules à plusieurs chambres séparées, carrosseries interchangeables et conteneurs, dans laquelle la structure est généralement parallélépipédique et comprend des parois isolées et une porte dans l'une de ses deux parois frontales, comporte un ensemble frigorifique dont les échangeurs thermiques servant de puits thermiques sont disposés dans la structure et dont les échangeurs thermiques servant de source thermique sont disposés à l'extérieur de la structure, dans laquelle les échangeurs thermiques servant de puits thermique sont montés au-dessous du plafond (1) de la structure sur l'une des parois frontales (2) et dans laquelle un déflecteur (5) est monté à peu près parallèlement à la paroi frontale (2) qui fait face à la porte, à distance de cette paroi, d'une manière telle que de l'air sortant de l'échangeur thermique (3) voisin de la paroi frontale (2) s'écoule vers le bas entre cette paroi frontale (2) et le déflecteur (5) et sort au voisinage d'un fond (6) de la structure,
**caractérisée en ce que**
- chaque échangeur thermique servant de puits thermique consiste en deux échangeurs thermiques (3, 3') espacés dans la direction longitudinale de la structure, à axes longitudinaux disposés transversalement à l'axe longitudinal A de la structure, **en ce que**
- au moins un ventilateur (4) qui souffle de l'air de préférence dans la direction de l'axe longitudinal A de la structure à travers les deux échangeurs thermiques (3, 3') est disposé entre les deux échangeurs thermiques (3, 3') de chaque ensemble, **en ce que**
- chaque déflecteur (5) est monté d'une manière telle qu'une première partie du débit global d'air s'écoule respectivement vers le bas hors de l'échangeur thermique (3) voisin de la paroi frontale (2) entre cette paroi frontale (2) et le déflecteur (5), et **en ce que**
- l'autre partie du flux global d'air s'écoule respectivement à travers l'autre échangeur thermique (3') et sort de la structure dans la direction de l'axe longitudinal A.

4. Structure frigorifique selon l'une quelconque des revendications précédentes, **caractérisée en ce que** le flux global d'air s'écoule à peu près par parties égales, c'est-à-dire environ pour 40 à 60%, à travers chacun des deux échangeurs thermiques (3, 3').

5. Structure frigorifique selon la revendication 4, **caractérisée en ce que** la distance de chaque déflecteur (5) à la paroi frontale (2) est respectivement d'environ 20 à 70 mm.

6. Structure frigorifique selon la revendication 4 ou 5, **caractérisée en ce que** la vitesse de l'air à la sortie de l'échangeur thermique (3, 3') est d'environ 8 à 15 m/s.

7. Structure frigorifique selon l'une quelconque des revendications précédentes, **caractérisée en ce que** trois ou quatre ventilateurs (4, 4' ou 4") sont respectivement disposés à distance côte à côte dans la direction transversale à l'axe longitudinal A de la structure.

8. Structure frigorifique selon la revendication 7, **caractérisée en ce que** les ventilateurs (4, 4', 4") sont des ventilateurs radiaux identiques entre eux, à arbres disposés verticalement.

9. Structure frigorifique selon l'une quelconque des revendications précédentes, **caractérisée en ce qu'**un dispositif de guidage (7, 7'), de préférence à lamelles de réglage, qui rétrécit en forme de buse le courant d'air est monté respectivement sur le côté de sortie d'air de chacun des deux échangeurs thermiques (3, 3').

10. Structure frigorifique selon l'une quelconque des revendications précédentes, **caractérisée en ce que** les échangeurs thermiques (3, 3') et/ou l'es ventilateurs (4, 4', 4") sont réglables individuellement ou par groupes.

11. Structure frigorifique selon la revendication 9, **caractérisée en ce que** les échangeurs thermiques (3, 3') peuvent être partiellement dégivrés sur un côté.
